# EUROPÄISCHE PATENTANMELDUNG

(11) **EP 2 447 620 A1**
(43) Veröffentlichungstag der Anmeldung: **02.05.2012**
(21) Anmeldenummer: 10014119.1
(22) Anmeldetag: 29.10.2010
(51) Int. Cl.: F24J 2/52

(54) **Vorrichtung zur Anordnung von Solarpaneelen und/oder Wärmekollektoren auf einem Untergrund sowie ein System, das wenigstens zwei solcher Vorrichtungen umfasst**

(71) Anmelder: Hafenbahn GmbH & Co. KG, 48431 Rheine (DE)
(72) Erfinder: Brinkmann, Manfred, 48431 Rheine (DE); Haase, Peer, 48429 Rheine (DE)
(74) Vertreter: Berkenbrink, Kai-Oliver

(57) **Zusammenfassung**

Vorrichtung (1) zur Anordnung von Solarpaneelen und/oder Wärmekollektoren auf einem Untergrund umfassend ein Bodenteil (3), eine Vorderwand (9) und eine Rückwand (13), die aus Kunststoff bestehen, sowie ein System, dass wenigstens zwei solcher Vorrichtungen umfasst.

## Beschreibung

Die Erfindung betrifft eine Vorrichtung zur Anordnung von Solarpaneelen und/oder Wärmekollektoren auf einem Untergrund sowie ein System, das wenigstens zwei solcher Vorrichtungen umfasst.

Unter den Begriffen Solarpaneelen und Wärmekollektoren werden hierin ganz allgemein Vorrichtungen verstanden, mit deren Hilfe Sonnenenergie nutzbar gemacht werden kann. Dabei können Solarpaneele und Wärmekollektoren, wie aus dem Stand der Technik bekannt, insbesondere als tafelförmige Elemente vorliegen. Solarpaneele können beispielsweise Photovoltaikanlagen sein, mit deren Hilfe Sonnenenergie in elektrische Energie umgewandelt werden kann. Wärmekollektoren können insbesondere Vorrichtungen sein, mit deren Hilfe Wasser durch Sonnenenergie erhitzbar ist.

Solarpaneele und/oder Wärmekollektoren werden bevorzugt schräg zu einer horizontalen Ebene angeordnet, so dass die Sonnenstrahlung in einem möglichst steilen Winkel auf die Solarpaneele und/oder Wärmekollektoren fällt.

Zur schrägen Anordnung von Solarpaneelen und/oder Wärmekollektoren auf einem Untergrund, insbesondere beispielsweise auf einem Flachdach, werden daher solche Vorrichtungen benötigt, an denen die Solarpaneele und/oder Wärmekollektoren in einer schrägen Stellung anordenbar sind.

Mittel zur Errichtung entsprechender Vorrichtungen sind aus dem Stand der Technik bekannt. Übliche Mittel zur Errichtung solcher Vorrichtungen umfassen üblicherweise ein erstes, insbesondere rahmenartiges Vorrichtungsteil, das auf einen Untergrund auflegbar ist, und ein zweites Vorrichtungsteil, das in einer schrägen Stellung zum ersten Vorrichtungsteil halterbar ist. Die Solarpaneele und/oder Wärmekollektoren sind anschließend an dem zweiten Vorrichtungsteil in einer schrägen Stellung anordenbar.
Die Mittel zur Errichtung solcher Vorrichtungen, also insbesondere die vorbezeichneten Vorrichtungsteile, sind üblicherweise aus Strahlprofilen gefertigt.

Entsprechende Vorrichtungen haben sich grundsätzlich zwar bewährt. Nachteilig ist jedoch, dass die Herstellung der Stahlprofile für die Vorrichtung relativ aufwendig und kostenintensiv ist. Nachteilig ist ferner, dass die Errichtung der Vorrichtung aus den vorbeschriebenen Mitteln verhältnismäßig aufwendig ist, wobei zudem häufig zusätzliche Befestigungsmittel zur Befestigung der Vorrichtung an dem Untergrund notwendig sind. Dies kann insbesondere bei der Errichtung der Vorrichtungen auf einem Flachdach nachteilig sein, da die Dachhaut hierfür beschädigt werden muss. Nachteilig ist schließlich auch, dass das zweite Vorrichtungsteil häufig nur kompliziert in eine definierte schräge Stellung zum ersten Vorrichtungsteil bringbar und in dieser Stellung halterbar ist.

Zur teilweisen Überwindung dieser Hindernisse sind aus dem Stand der Technik Kunststoffboxen bekannt, auf deren Oberseite Solarpaneele und/oder Wärmekollektoren in einer definierten Schrägstellung anordenbar sind. Solche Kunststoffboxen sind wesentlich einfacher und kostengünstiger herstell- und aufstellbar als die vorbezeichneten Vorrichtungen aus Stahlprofilen. Vorteilhaft an solchen Kunststoffboxen ist ferner, dass diese nicht über Befestigungsmittel an einem Untergrund befestigt werden müssen. Vielmehr werden solche Kunststoffboxen üblicherweise mit Lastmitteln beschwert, so dass sie witterungsunabhängig aufstellbar sind. Als Lastmittel sind insbesondere Kies, Sand oder Steinplatten bekannt, mit denen die Kunststoffboxen gefüllt werden. Eine Vorrichtung in Form einer solchen Kunststoffbox ist beispielsweise aus DE 698 15 086 T2 bekannt. EP 1 862 748 A2 beschreibt eine längenverstellbare Kunststoffbox. Der Ausrichtungswinkel der auf solche Boxen montierten Solarpaneele und/oder Wärmekollektoren wird durch die Neigung der beiden abfallenden Seitenwände der Box bestimmt.

Kunststoffboxen zur Anordnung von Solarpaneelen und/oder Wärmekollektoren auf einem Untergrund haben sich zwar grundsätzlich bewährt. Verbesserungsbedürftig ist jedoch der verhältnismäßig hohe Materialaufwand zur Herstellung entsprechender Kunststoffboxen.

Der Erfindung liegt die Aufgabe zu Grunde, eine Vorrichtung zur Anordnung von Solarpaneelen und/oder Wärmekollektoren auf einem Untergrund zur Verfügung zu stellen, die zumindest weitgehend aus Kunststoff besteht und die gegenüber den aus dem Stand der Technik bekannten Kunststoffboxen zur Anordnung von Solarpaneelen und/oder Wärmekollektoren mit einem geringeren Materialaufwand herstellbar ist.

Zur Lösung dieser Aufgabe wird erfindungsgemäß vorgeschlagen, eine Vorrichtung zur Anordnung von Solarpaneelen und/oder Wärmekollektoren auf einem Untergrund mit folgenden Merkmalen:
einem plattenförmigen Bodenteil, durch das die Vorrichtung auf einen Untergrund aufstellbar ist;
einer Vorderwand, die an dem Bodenteil angeordnet ist und sich vom Bodenteil nach oben bis zu einer Oberkante der Vorderwand erstreckt;
einer Rückwand, die beabstandet zur Vorderwand an dem Bodenteil angeordnet ist und sich vom Bodenteil nach oben bis zu einer Oberkante der Rückwand erstreckt;
das Bodenteil, die Vorderwand und die Rückwand bestehen aus Kunststoff; der Bereich des Bodenteils, der durch die Vorderwand und die Rückwand begrenzt ist, ist auf den beiden Seiten, die nicht durch die Vorderwand und die Rückwand begrenzt sind, durch keine Wände begrenzt.

Die Erfindung beruht auf der Grundüberlegung, statt den aus den Stand der Technik bekannten Kunststoffboxen zur Anordnung von Solarpaneelen und/oder Wärmekollektoren, die an der Vorder- und Rückseite sowie an den beiden Seite Wände aufweisen, eine Kunststoffrinne vorzusehen. Im Gegensatz zu den bekannten Boxen weist die erfindungsgemäße Vorrichtung in Form einer Rinne demnach keine Wände an ihren beiden Seiten auf, sondern ist an ihren beiden seitlichen Bereichen vielmehr durch keine Wände begrenzt. Die erfindungsgemäßen Vorrichtung in Form einer solchen Rinne wird gebildet durch das Bodenteil sowie durch die an diesem angeordnete Vorderwand und Rückwand. Indem nunmehr ein Bereich des Bodenteils, der durch die Vorderwand und Rückwand begrenzt ist, auf den beiden Seiten, die nicht durch die Vorderwand und die Rückwand begrenzt sind, durch keine Wände begrenzt ist, ergibt sich insgesamt die Form einer nach beiden Seiten offenen Rinne.

Überraschenderweise wurde im Rahmen der Erfindung festgestellt, dass auf die beiden Seitenwände von Kunststoffboxen zur Anordnung von Solarpaneelen und/oder Wärmekollektoren ohne Weiteres verzichtet werden kann, ohne dass sich die Festigkeitseigenschaften der Vorrichtung gegenüber Kunststoffboxen mit auf allen vier Seiten vorhandenen Wänden verschlechtern würden. Erfindungsgemäß wurde in diesem Zusammenhang unter anderem festgestellt, dass auf gattungsgemäßen Vorrichtungen angeordnete Solarpaneele und/oder Wärmekollektoren die Vorrichtungen zusätzlich versteifen, so dass die erfindungsgemäße Vorrichtung insbesondere mit daran angeordneten Solarpaneelen und/oder Wärmekollektoren hervorragende Festigkeitseigenschaften aufweist. Diese Festigkeitseigenschaften sind häufig besser als bei den bekannten Kunststoffboxen mit Wänden auf allen vier Seiten, da die erfindungsgemäße Vorrichtung aufgrund der fehlenden Seitenwände einen geringeren Windwiderstand darstellt. Im übrigen zeichnet sich die erfindungsgemäße Vorrichtung nicht nur durch den Vorteil einer Materialersparnis und verbesserter Festigkeitseigenschaften aus, sondern auch durch zahlreiche weitere Vorteile.

So ist insbesondere vorteilhaft, dass beliebig viele der erfindungsgemäßen, rinnenförmigen Vorrichtungen (insbesondere auch lückenlos) nebeneinander angeordnet werden können, so dass diese insgesamt eine durchgehende Rinne bilden. Ein solches System nebeneinander angeordneter Vorrichtungen, die frei von Seitenwänden sind, hat insbesondere den Vorteil, dass dieses durch die Aneinanderreihung der erfindungsgemäßen Vorrichtungen in einer beliebigen Länge konfektionierbar ist. Beispielsweise können benachbarte Vorrichtungen auch teilweise ineinander geschoben werden, so dass sie sich teilweise überlappen. Mithin lässt sich aus den erfindungsgemäßen, nebeneinander angeordneten Vorrichtungen ein System in Form einer durchgehenden Rinne mit einer beliebigen Länge erstellen, das an Solarpaneele und/oder Wärmekollektoren beliebiger Breite anpassbar ist. Solarpaneele und/oder Wärmekollektoren in beliebiger Anzahl und Breite können daher nebeneinander an einem System aus nebeneinander angeordneten, erfindungsgemäßen Vorrichtungen angeordnet werden, ohne dass das System seitlich überstehen würde.

Durch die sich teilweise überlappenden Bereiche benachbarter Vorrichtungen kann zudem die Steifigkeit und Festigkeit des Systems erhöht werden.

Des weiteren hat die durch mehrere nebeneinander angeordnete, erfindungsgemäße Vorrichtungen gebildete Rinne den Vorteil einer hervorragenden Durchlüftung, da die Luftzirkulation in der Rinne durch keine seitlichen Wände behindert wird. Durch diese verbesserte Durchlüftung kann der Bildung eines Wärmestaus im Inneren der Rinne oder der dortigen Bildung von Kondenswasser vorgebeugt werden. Die Bildung von Wärmestaus und von Kondenswasser im Inneren von Kunststoffboxen zur Anordnung von Solarpaneelen nach dem Stand der Technik stellen bisher ein erhebliches Problem dar.

Darüber hinaus erleichtert die durch mehrere nebeneinander angeordnete, erfindungsgemäße Vorrichtungen gebildete Rinne die Wartung und Reparatur der auf den Vorrichtungen beziehungsweise der auf dem durch die Vorrichtungen erstellten System angeordneten Solarpaneele und/oder Wärmekollektoren. Denn diese müssen für Wartungs- oder Reparaturzwecke nicht demontiert werden, da es bei entsprechender Dimensionierung der erfindungsgemäßen Vorrichtung möglich ist, durch die aus diesen gebildete, durchgehende Rinne zu "kriechen", um die Unterseite der Solarpaneele und/oder Wärmekollektören zu erreichen.

Ferner ist an der durchgehenden Rinne, die durch mehrere nebeneinander angeordnete erfindungsgemäße Vorrichtungen erstellbar ist, vorteilhaft, dass in dieser Leitungen, Kabel oder Rohren der Solarpaneele und/oder Wärmekollektoren verlegt werden können. Bei den aus dem Stand der Technik bekannten Kunststoffboxen mit Seitenwänden an allen vier Seiten ist dies nicht möglich, da die Seitenwände der Kunststoffboxen den Durchgang entsprechender Leitungen, Kabel oder Rohre verhindern, so dass diese regelmäßig außerhalb der Boxen verlegt werden müssen, wo sie deutlich schlechter geschützt sind als innerhalb der erfindungsgemäßen Vorrichtung. Insbesondere sind sie im Inneren der durchgehenden Rinne besser vor Tierverbiss und Witterung geschützt.

Das Bodenteil der erfindungsgemäßen Vorrichtung weist bevorzugt die Form einer im wesentlichen rechteckigen Platte auf. Dabei kann die Vorderwand im Bereich einer Außenkante und die Rückwand im Bereich der gegenüberliegenden Außenkante der Bodenplatte an dieser angeordnet sein. Im Bereich der verbleibenden, gegenüberliegenden Außenkanten der Bodenplatte, sind erfindungsgemäß keine Wände an der Bodenplatte angeordnet.

Nach einer bevorzugten Ausführungsform sind das Bodenteil, die Vorderwand und die Rückwand der Vorrichtung einstückig ausgebildet. Bevorzugt sind das Bodenteil sowie die Vorder- und Rückwand als einstückiges Kunststoffteil ausgebildet, besonders bevorzugt als einstückiges Kunststoffspritzgussteil.

Eine solche Vorrichtung in Form eines einstückigen Spritzgussteils ist besonders einfach und kostengünstig herstellbar.

Bevorzugt bestehen das Bodenteil, die Vorderwand und die Rückwand aus einem thermoplastischen Kunststoff, bevorzugt aus Polyethylen (BE) oder Polypropylen (PP), besonders bevorzugt aus Polyethylen hoher Dichte (HDPE).

Die Vorderwand und/oder die Rückwand können ebenfalls die Form einer im Wesentlichen rechteckigen Platte aufweisen. Nach einer bevorzugten Ausführungsform ist vorgesehen, dass wenigstens eine der folgenden Komponenten profiliert ausgebildet ist: Das Bodenteil, die Vorderwand oder die Rückwand. Die Profilierung von Bodenteil, Vorderwand oder Rückwand hat den Vorteil, dass sich hierdurch die Eigensteifigkeit und Festigkeit der Vorrichtung wesentlich erhöhen lässt.

Zur zusätzlichen Versteifung der Vorrichtung kann diese sich zwischen der Vorder- und Rückwand erstreckende Versteifungsmittel aufweisen, insbesondere in Form von Streben oder Wandungen. Diese Versteifungsmittel sind bevorzugt nicht in dem seitlichen Bereich des Bodenteils angeordnet, um ein Überlappen der Vorrichtung mit einer benachbarten Vorrichtung in diesem Bereich nicht zu behindern.

Die Oberkanten der Vorderwand und der Rückwand verlaufen bevorzugt parallel zum Bodenteil, so dass sie bei Aufstellung der erfindungsgemäßen Vorrichtung auf einem horizontalen Untergrund ebenfalls horizontal verlaufen. Ferner verlaufen die Oberkanten von Vorderwand und Rückwand bevorzugt parallel zueinander.

Die Vorderwand, die Rückwand und das Bodenteil können jeweils einen oder mehrere Durchbrüche aufweisen. Hierdurch kann zusätzlich Material gespart werden. Ferner wird die Vorrichtung leichter, so dass sie besser zu transportieren ist. Auch können entsprechende Durchbrüche für Wartungs- oder Reparaturzwecke benutzt werden, beispielsweise um in der Vorrichtung verlaufende Leitungen, Kabel oder Rohre zu reparieren oder warten.

Bei Aufstellung der Vorrichtung auf einem horizontalen Untergrund verläuft die Oberkante der Vorderwand bevorzugt in einer geringeren Höhe als die Oberkante der Rückwand. An den Oberkanten der Vorderwand und der Rückwand angeordneten Solarpaneele und/oder Wärmekollektoren lassen sich hierdurch in einer schrägen Stellung zum Untergrund anordnen.

Die Oberkante der Vorderwand und die Oberseite der Rückwand können zur Anordnung von Befestigungsmittel ausgebildet sein.

Insbesondere können die Oberkanten von Vorderwand und Rückwand zur Anordnung von solchen Befestigungsmitteln ausgebildet sein, durch die Solarpaneele und/oder Wärmekollektoren an der erfindungsgemäßen Vorrichtung anordenbar sind. Beispielsweise können die Oberkanten von Vorderwand und Rückwand Öffnungen aufweisen, durch die Befestigungsmittel führbar sind, beispielsweise Befestigungsmittel in Form von Schrauben oder Bolzen.

Nach einer besonders bevorzugten Ausführungsform sind die Oberkante der Vorderwand und die Oberkante der Rückwand zur Anordnung von Befestigungsmitteln, über die die Vorrichtung mit wenigstens einer benachbarten Vorrichtung verbindbar ist, ausgebildet. Die Oberkanten von Vorderwand und Rückwand sind demnach derart ausgebildet, dass die erfindungsgemäße Vorrichtung mit wenigstens einer weiteren, benachbarten erfindungsgemäßen Vorrichtung verbindbar ist.

Beispielsweise können benachbarte, beziehungsweise nebeneinander angeordnete Vorrichtungen über Befestigungsmittel in Form von Streben, Schienen oder Profilen miteinander verbindbar sein. Diese Befestigungsmittel, verlaufen bevorzugt von der Oberkante der Rückwand der einen Vorrichtung zur Oberkante der Rückwand der benachbarten Vorrichtung und von der Oberkante der Vorderwand der einen Vorrichtung zur Oberkante der Vorderwand der benachbarten Vorrichtung. Die vorbezeichneten Befestigungsmittel in Form von Streben, Schienen oder Profilen können beispielsweise aus Metall bestehen, beispielsweise aus Aluminium. Nach einer besonders bevorzugten Ausführungsform bestehen die Befestigungsmittel aus Kunststoff. Diese sind besonders günstig herstellbar.

Nach einer bevorzugten Ausführungsform sind Befestigungsmittel verschiebbar an den Oberkanten von Vorderwand und Rückwand anordenbar, so dass benachbarte Vorrichtungen bei Anordnung an solchen Befestigungsmitteln gegeneinander verschiebbar sind. Beispielsweise können auf den Oberkanten von Vorderwand und Rückwand Führungen vorgesehen sein, in denen die Befestigungsmittel verschiebbar halterbar sind. Entsprechend ausgebildete Befestigungsmittel können Arretiervorrichtungen aufweisen, so dass an diesen angeordneten Vorrichtungen in einer definierten Anordnung zueinander feststellbar sind.

Nach einer Ausführungsform sind die Befestigungsmittel in die Oberkante der Vorderwand und die Oberkante der Rückwand einrastbar, beziehungsweise aufclipsbar. Über entsprechend einrastbare Befestigungsmittel können benachbarte Vorrichtungen besonders schnell und einfach miteinander verbunden werden.

Wie oben ausgeführt, ermöglicht es die erfindungsgemäße Vorrichtung, dass in der durchgehenden Rinne, die durch mehrere nebeneinander angeordnete erfindungsgemäße Vorrichtungen erstellbar ist, Leitungen, Kabel oder Rohre (nachfolgend zusammenfassend als "Leitungen" bezeichnet), die zum Betrieb der Solarpaneele und/oder Wärmekollektoren notwendig sind, verlegt werden können. Nach einer bevorzugten Ausführungsform weist die erfindungsgemäße Vorrichtung Haltemittel für die Leitungen auf. Diese Haltemittel, die zum Halten, Befestigen und/oder Führen der Leitungen dienen können, können insbesondere auf der Oberseite des Bodenteils, an der Innenseite der Vorderwand (also der, der Rückwand zugewandten Seite der Vorderwand) und/oder an der Innenseite der Rückwand (also der, der Vorderwand zugewandten Seite der Rückwand) angeordnet sein. Nach einer Ausführungsform handelt es sich bei den Haltemitteln um Kabelhalter, Kabelschellen, Kabelführungen, Kabelklemmen, Kabelbinder, Kabelkanäle, Kabelrohre oder sonstige Kabelbefestigungen. Bevorzugt bestehen die Haltemittel für die Leitungen aus Kunststoff. Nach einer Ausführungsform ist vorgesehen, dass die Haltemittel für die Leitungen einstückig aus dem Bodenteil, der Vorderwand und/oder der Rückwand ausgeformt sind. Dies hat den Vorteil, dass die Haltemittel sehr stabil an der Vorrichtung anordenbar und exakt auf deren Geometrie abstimmbar sind. Alternativ kann beispielsweise vorgesehen sein, dass die Haltemittel für die Leitungen auf die Bodenplatte und/oder an die Innenseite von Vorder- und/oder Rückwand aufgeschraubt oder aufgesteckt sind.

Nach einer Ausführungsform kann ferner vorgesehen sein, das die Vorrichtung an der Bodenplatte, der Vorderwand und/oder der Rückwand Mittel zur Befestigung der Haltemittel für die Leitungen aufweist. Beispielsweise können dort Öffnungen vorgesehen sein, die zur Befestigung der Haltemittel an der Vorrichtung dienen.

Gegenstand der Erfindung ist ferner ein System zur Anordnung von Solarpaneelen zur Anordnung von Solarpaneelen und/oder Wärmekollektoren auf einem Untergrund, das wenigstens zwei der hierin beschriebenen Vorrichtungen umfasst, die derart nebeneinander angeordnet sind, dass die Oberkanten der Vorderwände und die Oberkanten der Rückwände der nebeneinander angeordneten Vorrichtungen miteinander fluchten.

Dabei können die miteinander fluchtenden Oberkanten der Vorderwände und Rückwände, wie oben ausgeführt, durch Befestigungsmittel miteinander verbunden sein.

Bei dem aus den nebeneinander angeordneten Vorrichtungen erstellten System können die Vorrichtungen fugenlos nebeneinander angeordnet sein. Hierdurch ist, wie oben ausgeführt, eine durchgehende Rinne aus mehreren - beispielsweise zwei, drei, vier oder noch mehreren - nebeneinander angeordneten Vorrichtungen erstellbar. Soweit die Vorrichtungen fugenlos nebeneinander angeordnet werden, hat dies beispielsweise den Vorteil, dass in die hierdurch gebildete, durchgehende Rinne Lastmittel in Form von Kies oder Sand geschüttet werden können, ohne dass dieser durch zwischen den Vorrichtungen verbleibende Fugen nach außen treten kann. Nach einer Fortbildung dieses Erfindungsgedankens können bei dem aus den nebeneinander angeordneten Vorrichtungen erstellten System die Vorrichtungen sich überlappend nebeneinander angeordnet sein. Durch diese sich überlappenden Bereiche nebeneinander angeordneter, erfindungsgemäßer Vorrichtungen kann die Steifigkeit und Festigkeit des Systems noch wesentlich verbessert werden.

Es kann vorgesehen sein, dass die Vorrichtung Rastmittel aufweist, über die sie mit einer benachbarten Vorrichtung verrastbar ist. Entsprechende Rastmittel können insbesondere in dem Bereich der Vorrichtung angeordnet sein, in dem die Vorrichtung mit einer benachbarten Vorrichtung überlappbar ist. Hierdurch kann ein unbeabsichtigtes Lösen benachbarter und einander überlappender Vorrichtungen erschwert werden.

Ausführungsbeispiele erfindungsgemäßer Vorrichtungen sowie ein Ausführungsbeispiel eines erfindungsgemäßen Systems soll anhand der nachfolgenden Figurenbeschreibung näher erläutert werden.

Dabei zeigt
- Figur 1: eine Vorrichtung zur Anordnung von Solarpaneelen und/oder Wärmekollektoren auf einem Untergrund in einer perspektivischen Ansicht von schräg oben,
- Figur 2: die Vorrichtung gemäß Figur 1 in einer Seitenansicht (gemäß Figur 1 von links),
- Figur 3: ein System zur Anordnung von Solarpaneelen und/oder Wärmekollektoren auf einem Untergrund mit zwei Vorrichtungen gemäß Figur 1 in einer perspektivischen Ansicht von schräg oben während der Montage,
- Figur 4: das System gemäß Figur 3 im zusammengebauten Zustand,
- Figur 5: eine Vorrichtung gemäß Figur 1 mit auf den Oberkanten von Vorder- und Rückwand angeordneten Schienen in einer perspektivischen Ansicht von schräg unten,
- Figur 6: eine Vorrichtung gemäß Figur 1 mit an der Innenseite der Rückwand angeordneten Kabelhaltern und
- Figur 7: die Vorrichtung gemäß Figur 6 in einer Seitenansicht (gemäß Figur 6 von links).

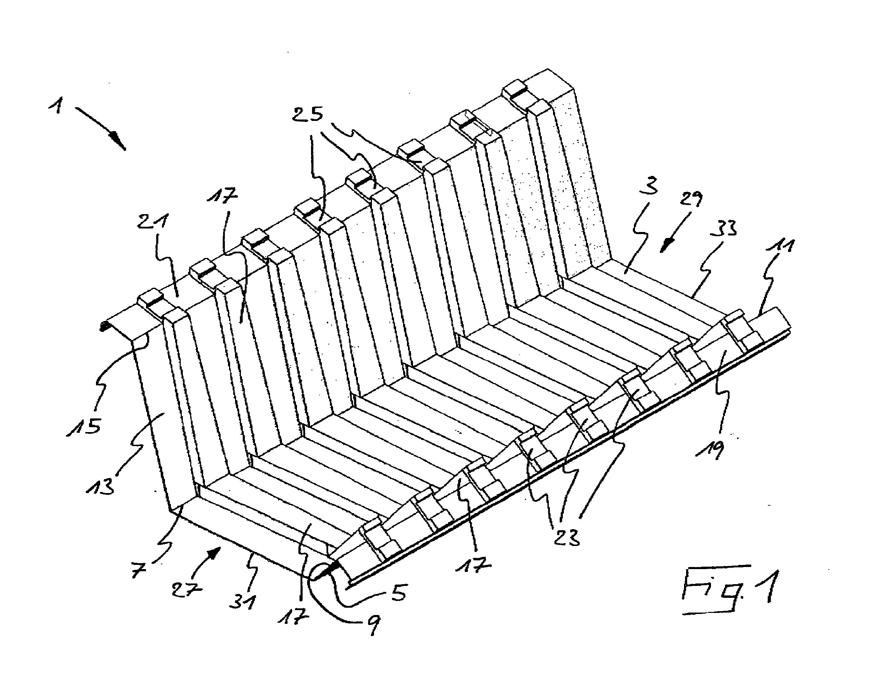

Bei der Vorrichtung gemäß Figur 1 handelt es sich um ein einstückiges Kunststoffspritzgussteil aus Polyethylen hoher Dichte (HDPE).

Die Vorrichtung 1 nach Figur 1 umfasst ein plattenförmiges Bodenteil 3 mit einem im Wesentlichen rechteckigen Außenumfang. An der einen Außenkante 5 des Bodenteils 3 ist eine Vorderwand 9 angeordnet, die sich vom Bodenteil 3 schräg nach oben bis zu einer Oberkante 11 erstreckt. Die Vorderwand 9 ist im wesentlich plattenförmig mit einem rechteckigen Außenumfang konfektioniert. Dabei ist die Vorderwand 9 in einem Winkel von etwa 40° von der Bodenplatte 3 weg geneigt.

An der, der Außenkante 5 gegenüberliegenden Außenkante 7 der Bodenplatte 3 ist eine Rückwand 13 angeordnet, die sich vom Bodenteil schräg nach oben bis zu einer Oberkante 15 erstreckt. Die Rückwand 13, die ebenfalls im wesentlich plattenförmig mit einem rechteckigen Außenumfang gestaltet ist, ist in einem Winkel von etwa 8° von der Bodenplatte 3 weg geneigt.

Die Außenkanten 5 und 7 der Bodenplatte 3 verlaufen parallel und beabstandet zueinander. Die Breite der Bodenplatte 3, also der Abstand zwischen ihren gegenüberliegenden Außenkanten 5 und 7, entspricht ungefähr der Breite der Rückwand 14, also der Breite der Rückwand 13 von ihrem Fußpunkt an der Bodenplatte 3 bis zu ihrer Oberkante 15.

Die Breite der Vorderwand 9, also der Breite der Vorderwand 9 von ihrem Fußpunkt an der Bodenplatte bis zu ihrer Oberkante 11, beträgt ungefähr 40 % der Breite der Rückwand 13.

Die Vorrichtung 1 weist eine profilierte Struktur auf. Dabei weisen die Bodenplatte 3, die Vorderwand 9 und die Rückwand 13 jeweils eine gerippte Struktur auf. Diese Rippen 17 erstrecken sich quer zur Längsrichtung der Bodenplatte 3 zwischen Vorderwand und Rückwand 13 und gehen dort in die Rippen der Vorderwand 9 und der Rückwand 13 über.

Im Bereich ihrer Oberkanten 11, 15 weisen die Vorderwand 9 und die Rückwand 13 jeweils einen nach außen umgebogenen Abschnitt 19, 21 auf. Die Rippen 17 setzen sich auf diesen Abschnitten 19, 21 fort und weisen dort nutförmige Einbuchtungen 23, 25 auf.

Die vorbezeichneten Komponenten der Vorrichtung 1 sind als einteiliges Kunststoffspritzgussteil ausgeformt.

Wie die Figuren zeigen, ist der Bereich des Bodenteils 3, der durch die Vorderwand 9 und die Rückwand 13 begrenzt ist, auf den beiden Seiten 27, 29, die nicht durch die Vorderwand 9 und die Rückwand 13 begrenzt sind, durch keine Wände begrenzt. Mit anderen Worten: An den beiden gegenüberliegenden Außenkanten 31, 33 des Bodenteils 3, an denen die Vorderwand 9 und die Rückwand 13 nicht angeordnet sind, sind keine Wände angeordnet.

Wie die Figuren zeigen, weist die Vorrichtung 1 danach insgesamt im Wesentlichen die Form einer Rinne auf.

Die nutförmigen Einbuchtungen 23, 25 in den Abschnitten 19, 21 der Vorderwand 9 und der Rückwand 13 dienen zur Aufnahme von Befestigungsmitteln in Form von Aluminiumschienen. Die Einbuchtungen 23, 25 sind dabei derart ausgebildet, dass Aluminiumschienen gleitend in den Einbuchtungen 23, 25 verschoben werden können.

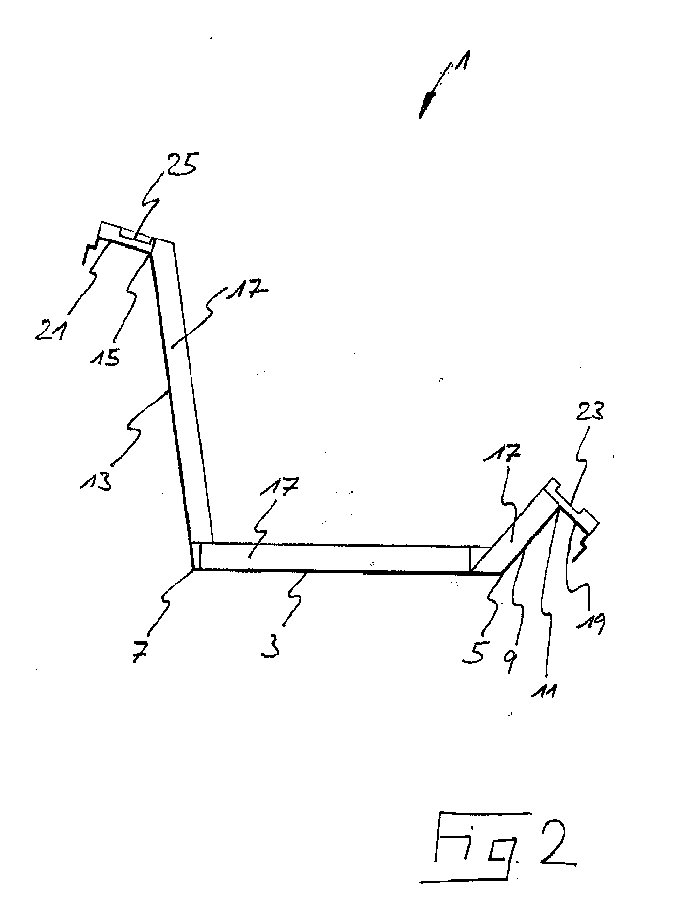

Über solche Aluminiumschienen ist es möglich, mehrere der in den Figuren 1 und 2 dargestellten Vorrichtungen 1 miteinander zu verbinden. Hierzu werden mehrere der in Figur 1 dargestellten Vorrichtungen 1 derart nebeneinander angeordnet, dass die jeweiligen Oberkanten 11, 15 der nebeneinander angeordneten Vorrichtungen 1 miteinander fluchten.

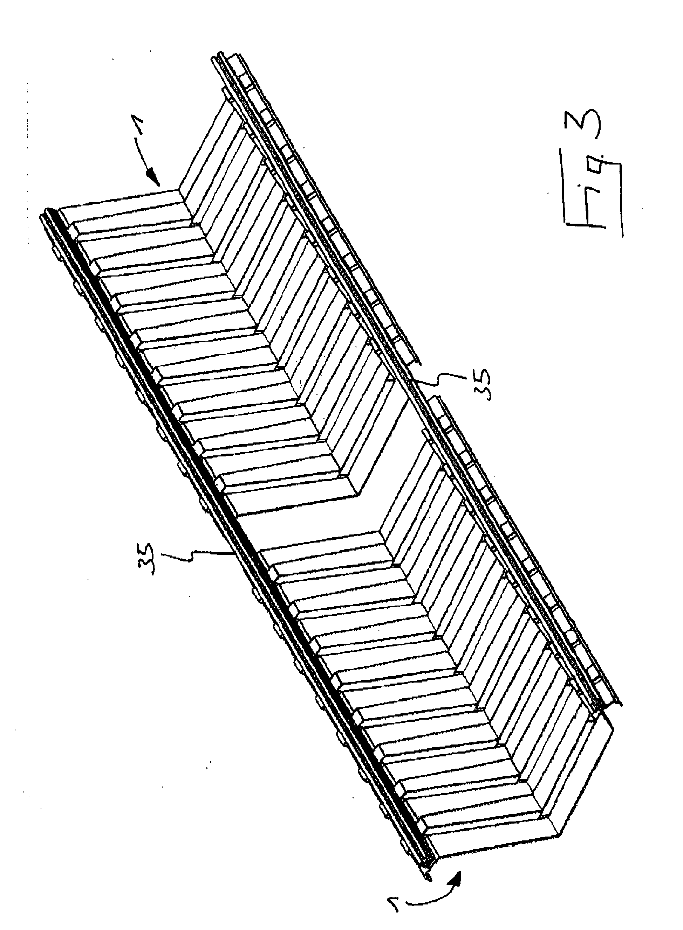

In Figur 3 sind zwei derart nebeneinander angeordnete Vorrichtungen 1 dargestellt. Nachdem die Vorrichtungen 1 derart nebeneinander angeordnet sind, werden Aluminiumschienen 35 jeweils in die nutförmigen Einbuchtungen 23, 25 eingelegt. Aufgrund der fluchtenden Ausrichtung der nebeneinander angeordneten Vorrichtungen 1 ist es möglich, jeweils eine Aluminiumschiene in die nutförmigen Einbuchtungen 23 beziehungsweise 25 benachbarter Vorrichtungen 1 einzulegen. Auf diese Weise sind benachbarte Vorrichtungen 1 über die Aluminiumschienen 35 miteinander verbindbar.

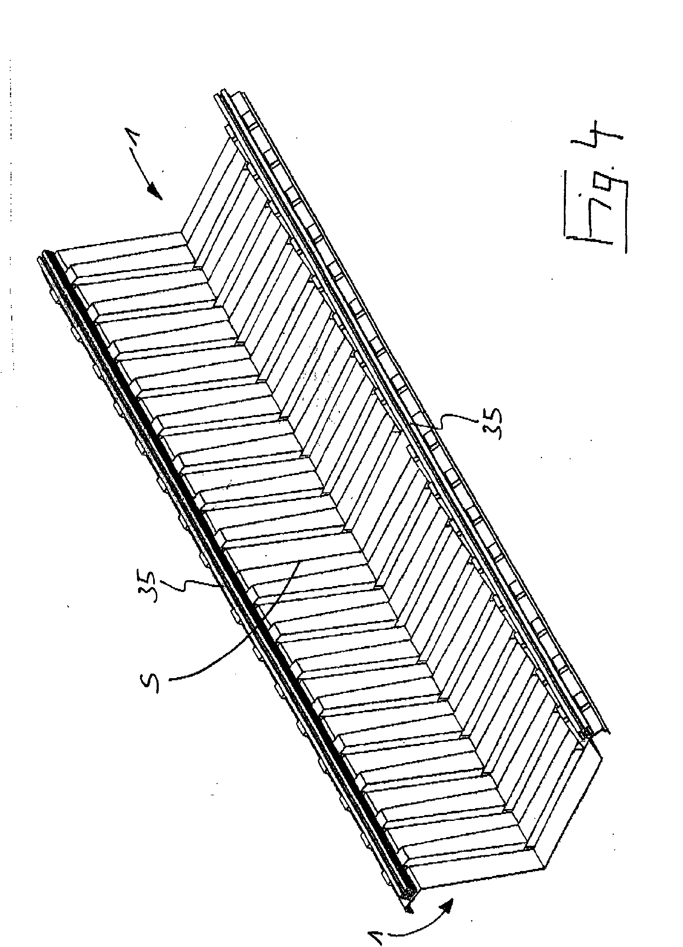

Zur Montage werden die Vorrichtungen 1 zunächst mit Abstand nebeneinander angeordnet und in dieser Stellung die Aluminiumschiene 35 in die miteinander fluchtenden Einbuchtungen 23 beziehungsweise 25 eingelegt, wie in Figur 3 dargestellt. Anschließend werden die Vorrichtungen 1 aufeinander zugeschoben, bis die Vorrichtungen 1 fugenlos nebeneinander angeordnet sind, wie in Figur 4 dargestellt. Die Stoßkante ist mit S bezeichnet.

Wie Figur 4 zeigt, ergeben mehrere nebeneinander angeordnete Vorrichtungen 1 damit eine durchgehende Rinne. Diese durchgehende Rinne ist auf einem Untergrund aufgestellt, indem das plattenförmige Bodenteil 3 der jeweiligen Vorrichtungen 1 auf dem Untergrund aufliegt.

An der durchgehenden Rinne können Solarpaneele und/oder Wärmekollektoren befestigt werden. Hierzu sind die Aluminiumschienen 35 bevorzugt derart ausgebildet, dass an diesen Solarpaneele und/oder Wärmekollektoren beziehungsweise Vorrichtungen zu deren Aufnahme, wie beispielsweise Rahmen oder Schienen, befestigt werden können.

Wie Figur 2 zeigt, ist die Verbindungslinie zwischen der Oberkante 11 der Vorderwand 9 und der Oberkante 15 der Rückwand 13 in einem Winkel von etwa 30° zur Bodenplatte 3 angeordnet, so dass - ohne weitere Schrägstellungsmittel - Solarpaneele und/oder Wärmekollektoren mittels der im Ausführungsbeispiel dargestellten Vorrichtung 1 in einem Winkel von etwa 30° zum Untergrund angeordnet werden können.

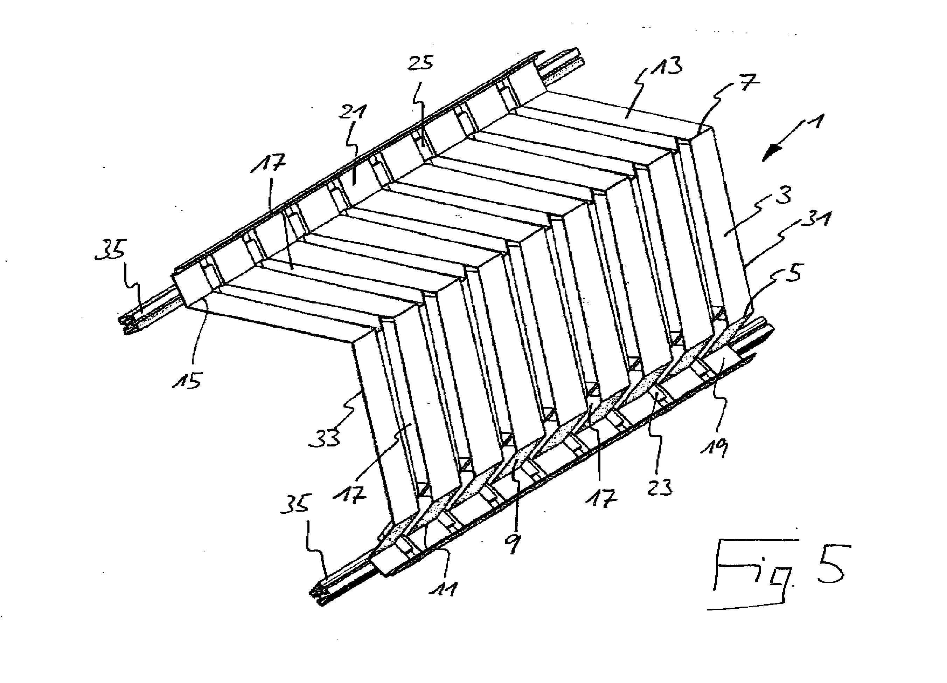

Figur 5, die eine Unteransicht auf eine Vorrichtung 1 anzeigt, lässt deutlich erkennen, wie die Rippen 17 aus Bodenplatte 3, Vorderwand 9 und Rückwand 13 ausgeformt sind.

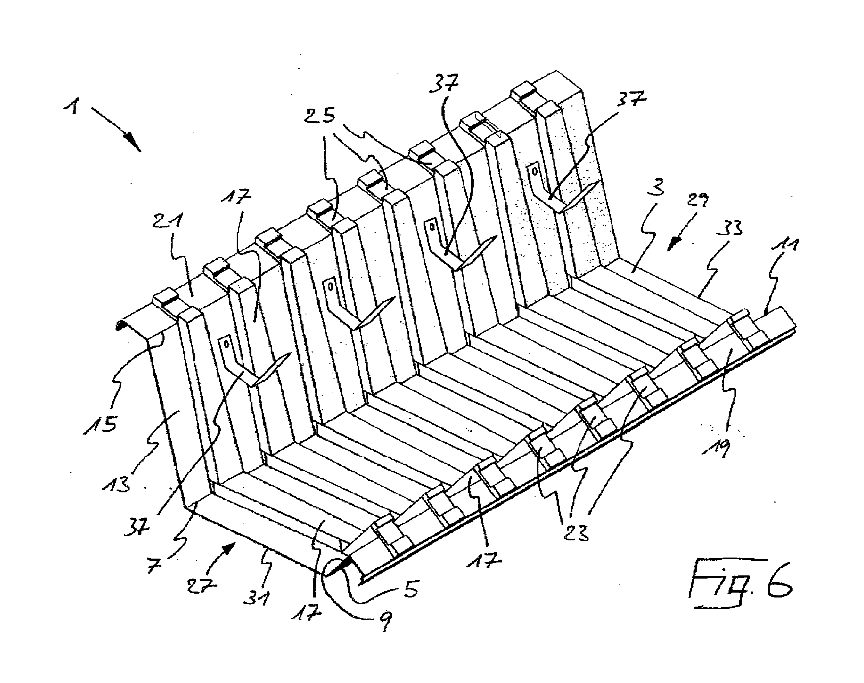

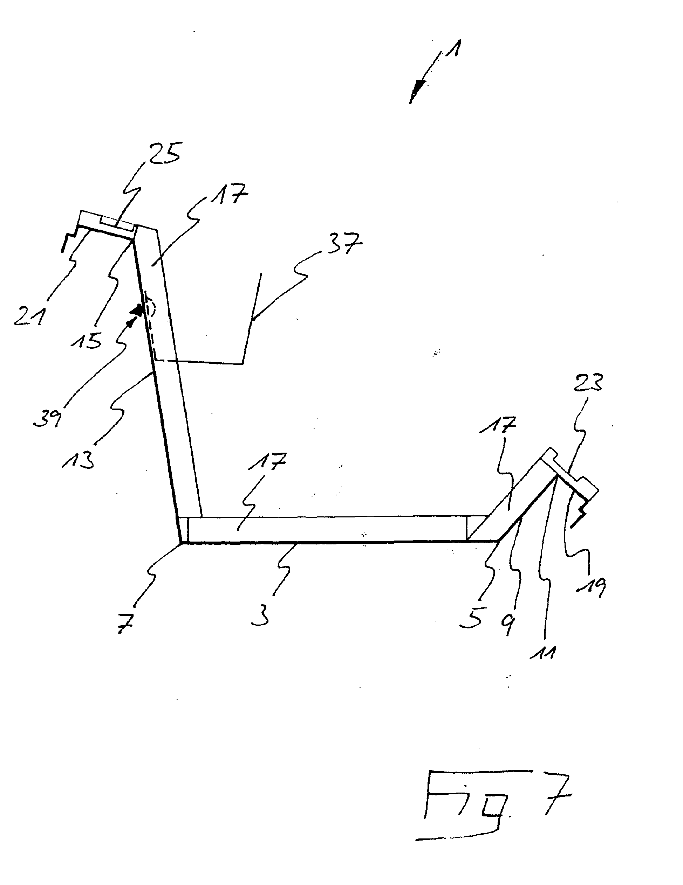

Bei dem Ausführungsbeispiel gemäß den Figuren 6 und 7 gleicht die Vorrichtung 1 grundsätzlich der Ausführungsform der nach den Figuren 1 und 2, jedoch ergänzt um Kabelhalter 37, die an der Innenseite der Rückwand 13 angeordnet sind. Jeder Kabelhalter 37 ist ein einstückiges Kunststoffteil und weist im wesentlichen die Form eines "U" auf. Im Ausführungsbeispiel sind vier solcher Kabelhalter 37 an der Vorrichtung 1 angeordnet, und zwar jeweils an einem Bereich der Rückwand 13, der zwischen den Rippen 17 liegt.

Zur Befestigung der Kabelhalter 37 weisen diese jeweils einen Dorn 39 (siehe Figur 7) mit Hinterschnitt auf, der durch eine Öffnung der Rückwand 13 gesteckt ist, so dass die Kabelhalter 37 jeweils rastend in der Öffnung gehalten sind. Die Kabelhalter 37 sind fluchtend entlang der Längserstreckung der Vorrichtung 1 angeordnet, also fluchtend in Richtung der Oberkanten 11, 15 von Vorder- und Rückwand 9, 13. Entsprechend können in den Kabelhaltern 37 Leitungen entlang des aus den Vorrichtungen 1 erstellten Systems gehalten werden.

In der Darstellung nach Figur 7 ist deutlich die U-Form der Kabelhalter 37 zu erkennen.

## Patentansprüche

1. Vorrichtung zur Anordnung von Solarpaneelen und/oder Wärmekollektoren auf einem Untergrund mit folgenden Merkmalen:
1.1 einem plattenförmigen Bodenteil (3), durch das die Vorrichtung auf einen Untergrund aufstellbar ist;
1.2 einer Vorderwand (9), die an dem Bodenteil (3) angeordnet ist und sich vom Bodenteil (3) nach oben bis zu einer Oberkante (11) der Vorderwand (9) erstreckt;
1.3 einer Rückwand (13), die beabstandet zur Vorderwand (9) an dem Bodenteil (3) angeordnet ist und sich vom Bodenteil (3) nach oben bis zu einer Oberkante (15) der Rückwand (13) erstreckt;
1.4 das Bodenteil (3), die Vorderwand (9) und die Rückwand (13) bestehen aus Kunststoff;
1.5 der Bereich des Bodenteils (3), der durch die Vorderwand (9) und die Rückwand (13) begrenzt ist, ist auf den beiden Seiten (27, 29), die nicht durch die Vorderwand (9) und die Rückwand (13) begrenzt sind, durch keine Wände begrenzt.

2. Vorrichtung nach Anspruch 1, bei der das Bodenteil (3), die Vorderwand (9) und die Rückwand (13) einstückig ausgebildet sind.

3. Vorrichtung nach Anspruch 1, bei der wenigstens eine der folgenden Komponenten profiliert ausgebildet ist: das Bodenteil (3), die Vorderwand (9) oder die Rückwand (13).

4. Vorrichtung nach Anspruch 1, bei der die Oberkante (11) der Vorderwand (9) und die Oberkante (15) der Rückwand (13) zur Anordnung von Befestigungsmitteln (35) ausgebildet sind.

5. Vorrichtung nach Anspruch 1, bei der die Oberkante (11) der Vorderwand (9) und die Oberkante (15) der Rückwand (13) zur Anordnung von Befestigungsmitteln (35), über die die Vorrichtung mit wenigstens einer benachbarten Vorrichtung verbindbar ist, ausgebildet sind.

6. Vorrichtung nach Anspruch 1, bei der die Oberkante (11) der Vorderwand (9) und die Oberkante (15) der Rückwand (13) zur einrastbaren Anordnung von Befestigungsmitteln (35), über die die Vorrichtung mit wenigstens einer benachbarten Vorrichtung verbindbar ist, ausgebildet sind.

7. Vorrichtung nach Anspruch 1, die Haltemittel (37) für Leitungen aufweist, die auf der Oberseite des Bodenteils (3), an der Innenseite der Vorderwand (9) und/oder an der Innenseite der Rückwand (13) angeordnet sind.

8. System zur Anordnung von Solarpaneelen und/oder Wärmekollektoren auf einem Untergrund, umfassend wenigstens zwei Vorrichtungen (1) nach Anspruch 1, die derart nebeneinander angeordnet sind, dass die Oberkanten (11) der Vorderwände (9) und die Oberkanten (15) der Rückwände (13) der nebeneinander angeordneten Vorrichtungen (1) miteinander fluchten.

9. System nach Anspruch 8, bei dem die miteinander fluchtenden Oberkanten (11, 15) der Vorderwände (9) und Rückwände (13) jeweils durch Befestigungsmittel (35) miteinander verbunden sind.

10. System nach Anspruch 8, bei dem die Vorrichtungen (1) fugenlos nebeneinander angeordnet sind.

11. System nach Anspruch 8, bei dem die Vorrichtungen (1) sich überlappend nebeneinander angeordnet sind.

## Geänderte Patentansprüche

### Geänderte Patentansprüche gemäss Regel 137(2) EPÜ.

**1.** Vorrichtung zur Anordnung von Solarpaneelen und/oder Wärmekollektoren auf einem Untergrund mit folgenden Merkmalen:
1.1 einem plattenförmigen Bodenteil (3), durch das die Vorrichtung auf einen Untergrund aufstellbar ist;
1.2 einer Vorderwand (9), die an dem Bodenteil (3) angeordnet ist und sich vom Bodenteil (3) nach oben bis zu einer Oberkante (11) der Vorderwand (9) erstreckt;
1.3 einer Rückwand (13), die beabstandet zur Vorderwand (9) an dem Bodenteil (3) angeordnet ist und sich vom Bodenteil (3) nach oben bis zu einer Oberkante (15) der Rückwand (13) erstreckt;
1.4 das Bodenteil (3), die Vorderwand (9) und die Rückwand (13) bestehen aus Kunststoff;
1.5 der Bereich des Bodenteils (3), der durch die Vorderwand (9) und die Rückwand (13) begrenzt ist, ist auf den beiden Seiten (27, 29), die nicht durch die Vorderwand (9) und die Rückwand (13) begrenzt sind, durch keine Wände begrenzt;
**dadurch gekennzeichnet, dass**
1.6 bei Aufstellung der Vorrichtung auf einen Untergrund die Oberkante (I1) die Vorderwand (9) in einer geringeren Höhe als die Oberkante (15) der Rückenwand (13) verläuft, so dass an den Oberkanten (15) der Vorderwand (9) und der Rückwand (13) angeordnete Solarpaneele und/oder Wärmekollektoren in einer schrägen Stellung zum Untergrund anordenbar sind.
